# EUROPÄISCHE PATENTSCHRIFT

(11) **EP 2 095 073 B1**
(45) Veröffentlichungstag und Bekanntmachung des Hinweises auf die Patenterteilung: **06.03.2013**
(21) Anmeldenummer: 07820555.6
(22) Anmeldetag: 25.09.2007
(51) Int. Cl.: G01C 15/00

(54) **NIVELLIERGERÄT MIT MINDESTENS EINEM KARDANISCH GELAGERTEN LASER**
LEVELLING INSTRUMENT WITH AT LEAST ONE LASER WHICH IS MOUNTED IN UNIVERSALLY JOINTED FASHION
APPAREIL DE NIVELLEMENT DOTE D'AU MOINS UN LASER MONTE SUR CARDANS

(30) Priorität: 23.11.2006 DE 102006055260
(43) Veröffentlichungstag der Anmeldung: 02.09.2009
(73) Patentinhaber: Robert Bosch GmbH, 70442 Stuttgart (DE)
(72) Erfinder: PRAUSE, Carsten, 53757 St. Augustin (DE); BERGNER, Joao Jorge, 71134 Aidlingen (DE); SCHULTE, Clemens, 70197 Stuttgart (DE); ADAMCZAK, Wolfgang, 70597 Stuttgart (DE)
(86) Internationale Anmeldenummer: PCT/EP2007/060157
(87) Internationale Veröffentlichungsnummer: WO 2008/061831

(56) Entgegenhaltungen:
- DE-A1- 19 810 447
- US-A- 5 220 455
- US-A- 6 002 473

## Beschreibung

Die Erfindung betrifft ein Nivelliergerät mit mindestens einem kardanisch gelagerten Laser, insbesondere einem Linienlaser.

### Stand der Technik

Ein derartige Nivelliergerät ist zum Beispiel zum Projizieren einer vorzugsweise horizontalen Laserlinie an einer Arbeitsfläche bekannt. Die Laserlinie wird durch eine Optik erzeugt, die den Laserstrahl in einer Achse auffächert, sodass dieser eine Laserlinie anstelle eines Laserpunktes projiziert. Unter einem Linienlaser ist in diesem Zusammenhang ein System aus Laser und auffächernder Optik oder einem wirkungsgleichen System zu verstehen. Eine derartige Laserlinie wird beispielsweise von Handwerkern als Bezugslinie für aufzubringende Fliesenspiegel, die Montage von Hängeschränken und Bildern oder für Vermessungsaufgaben verwendet. Das Nivelliergerät weist weiterhin eine kardanische Lagerung des Lasers auf, die ein selbsttätiges Nivellieren - zum Beispiel die selbsttätige horizontale beziehungsweise vertikale Ausrichtung der Laserlinie - ermöglicht. Die Forderung nach hoher Genauigkeit mit Toleranzen von +/- 1 mm auf 3 m Linienlänge erfordert eine hohe Präzision bei der Anfertigung der Bauteile, ihrer Montage und der Justierung. Dabei wird gefordert, dass nach erfolgter Auslenkung eines als Kreuzgelenkpendel ausgebildeten Pendelkompensators sich der Ruhezustand mit ausgerichteter Laserlinie exakt wieder einstellt. Um diesen Forderungen gerecht zu werden, benötigt die kardanische Lagerung des Nivelliergeräts kleine Fertigungstoleranzen bei seinen Lagerbohrungen, sowie hohe Anforderungen an die Fluchtung der entsprechenden Lagerstellen. Bei der Herstellung der kardanischen Lagerung müssen teure Bauteile wie Miniaturkugellager mit spezieller Lagerluft in den Kreuzgelenken des Kreuzgelenkpendels zwecks Reduzierung der Reibung und spezielle Schmierfette mit hoher Viskosität zur Reduzierung der Reibung in den Lagern verwendet werden. Zudem sind Dämpfungsmaßnahmen zwischen Gehäuse und Lagerbrücken des Nivelliergeräts unerlässlich.

Aus der DE 198 10 447 A1 ist eine Aufhängung für eine schwerkraftbeeinflusste Messeinrichtung bekannt, die eine, in wenigstens einer lateralen Richtung pendelartig schwingbar aufgehängte Trägerstruktur für ein Messsystem und/oder eine optische Anordnung aufweist. Die Trägerstruktur der DE 198 10 447 A1 besitzt wentgstens ein Gelenk das als Folienschamier ausgebildet ist.

Aus der US 5,220,455 ist ein fluidgedämpfter, zweistufiger Pendelaufbau für eine optische Anordnung bekannt. Bei dieser Vorrichtung kommt zumindest ein Bauteil des Pendelaufbaus in einer viskosen Flüssigkeit zu liegen, um das fadengehaltende Pendel stark zu dämpfern.

Aufgabe der Erfindung ist es, ein Nivelliergerät mit einer kardanischen Lagerung bereitzustellen, bei dem die Reibung deutlich verringert ist.

### Offenbarung der Erfindung

Zur Lösung dieser Aufgabe ist vorgesehen, dass die kardanische Lagerung als Kreuzgelenk-Fadenpendel ausgebildet Ist, das eine Doppelschaukel aufweist, deren eine, erste Schaukel eine Schwingebene besitzt, die mit einer Schwingebene ihrer anderen, zweiten Schaukel einen Winkel ungleich Null einschließt, wobei die Schaukeln jeweils mindestens zwei zueinander beabstandete Pendelarme aus biegeschlaffen Zugmitteln aufweisen. Die Doppelschaukel des Kreuzgelenk-Fadenpendels besteht aus einer ersten Schaukel mit einer ersten Schwingebene und einer zweiten, an der ersten Schaukel hängenden zweiten Schaukel mit einer zweiten Schwingebene, die nicht mit der ersten Schwingebene zusammenfällt. Die erste Schaukel ist direkt oder indirekt in einem Gehäuse des Nivelliergeräts gelagert, während der Laser direkt oder indirekt an der zweiten Schaukel gelagert ist. Durch die Aufteilung der Relativbewegung des Lasers gegenüber dem Gehäuse in zwei Bewegungen entlang der beiden Schwingebenen wird eine kardanische Lagerung des Lasers erreicht. Da die Funktion der Lager beim Kreuzgelenkpendel von den biegeschlaffen Zugmitteln übernommen wird, kann das Auftreten von Reibung weitgehend vermieden werden. Durch die geringe Reibung erfolgt ein selbsttätiges Nivellieren - zum Beispiel die selbsttätige horizontale beziehungsweise vertikale Ausrichtung der Laserlinie - mit hoher Genauigkeit, wobei sich nach einer Auslenkung der Ruhezustand mit ausgerichteter Laserlinie exakt wieder einstellt. Dazu können die Zugmittel mit anderen Bauteilen des Kreuzgelenk-Fadenpendels direkt und ohne Lagerung verbunden werden, wobei lediglich einfache und kostengünstige Bauteile mit verhältnismäßig geringem Gewicht verwendet werden. Durch die geringen Reibungskräfte kann eine hohe Genauigkeit der Nivellierung erreicht werden, da die kardanische Lagerung als Kreuzgelenk-Fadenpendel eine geringe Hysterese aufweist. Somit ist eine einfache und selbsttätige Justierung des Lasers möglich.

Insbesondere ist eine erste Aufhängung vorgesehen, an der die erste Schaukel hängend befestigt ist. Die erste Aufhängung ist zum Beispiel am Gehäuse des Nivelliergeräts befestigt oder selbst ein Teil dieses Gehäuses.

Weiterhin ist vorgesehen, dass die erste Schaukel einen ersten Schaukeltisch aufweist, der eine zweite Aufhängung bildet, an der die zweite Schaukel hängend befestigt ist. Der Schaukeltisch entspricht in einem einfachen Ausführungsbeispiel einem Schaukelbrett einer Kinderschaukel, das durch zwei beabstandete biegeschlaffe Zugmittel an der jeweiligen Aufhängung hängend befestigt ist.

Weiterhin ist vorgesehen, dass die zweite Schaukel einen zweiten Schaukeltisch aufweist, an dem der Laser befestigt ist. Alternativ kann der Laser ein Bauteil aufweisen, das als zweiter Schaukeltisch der zweiten Schaukel dient.

Mit Vorteil ist vorgesehen, dass der Winkel zwischen den Schwingebenen 90° oder annähernd 90° beträgt. Beträgt der Winkel zwischen den Schwingebenen 90°, so ist die Relativbewegung zwischen dem Laser und dem Gehäuse des Nivelliergeräts in zwei unabhängige Bewegungsteile aufgeteilt. Ist die Relativbewegung zum Beispiel eine Schwingung, so wird diese in zwei unabhängige Pendelbewegungen der beiden Schaukeln aufgeteilt.

Insbesondere ist vorgesehen, dass zumindest der erste Schaukeltisch plattenförmig oder etwa plattenförmig ausgebildet ist. Eine plattenförmige Ausbildung des ersten Schaukeltischs ist einfach realisierbar und ermöglicht einen einfachen Aufbau des Kreuzgelenk-Fadenpendels. Alternativ kann der erste Schaukeltisch jedoch zum Beispiel auch stabförmig ausgebildet sein.

In einer bevorzugten Ausführungsform ist vorgesehen, dass mindestens ein Zugmittel in der Ruhestellung der zugeordneten Schaukel beziehungsweise der Doppelschaukel mit der Vertikalen einen Winkel ungleich Null einschließt und vorzugsweise dabei in einer Ebene liegt, die 90° zur zugeordneten Schwingebene verläuft. Bei einer derartigen Anordnung schwingt die entsprechende Schaukel bevorzugt nur in ihrer Schwingebene. Eine Anregung einer Schwingung in einer anderen Richtung - zum Beispiel senkrecht zu dieser Schwingebene - wird unterdrückt.

Nach einerbevorzugten Ausgestaltung der Erfindung ist vorgesehen, dass die Aufhängung, die Zugmittel und der Schaukeltisch mindestens einer der Schaukeln ein gleichschenkliges Trapez bilden. Bei einer derartigen Aufhängung des Schaukeltischs wird eine Schwingung in einer Richtung außerhalb der zugeordneten Schwingebene der Schaukel fast vollständig unterbunden.

Weiterhin ist vorgesehen, dass die Aufhängung und der Schaukeltisch jeder der Schaukeln Befestigungspunkte aufweisen, an denen die zugehörigen Zugmittel befestigt sind. Diese Befestigungspunkte entsprechen in ihrer Funktion den Lagern bei einem herkömmlichen Kreuzgelenkpendel. Durch die geringe Steifigkeit der biegeschlaffen Zugmittel können die entsprechenden Schaukeltische der ersten und zweiten Schaukel ohne größere Reibungsverluste bewegt werden, sodass das Kreuzgelenk-Fadenpendel kaum Hysterese aufweist. Die Befestigungspunkte einer zugeordneten Schaukel sind dabei vorzugsweise linear auf der Aufhängung beziehungsweise dem Schaukeltisch angeordnet. Jeder Befestigungspunkt ist beabstandet zu den jeweils anderen Befestigungspunkten angeordnet.

Nach einer Weiterbildung der Erfindung ist vorgesehen, dass die oberen Befestigungspunkte gegenüber den unteren Befestigungspunkten einer Schaukel weiter auseinanderliegen.

Mit Vorteil ist vorgesehen, dass eine erste gedachte Verbindungslinie zwischen den der ersten Schaukel zugeordneten Verbindungspunkten des ersten Schaukeltischs und eine zweite Verbindungslinie zwischen den der zweiten Schaukel zugeordneten Verbindungspunkten des zweiten Schaukeltischs ein Kreuz bilden, insbesondere einen Winkel von 90° einschließen. Wird ein Winkel von 90° eingeschlossen, so liegen die beiden Schwingebenen senkrecht aufeinander und das Kreuzgelenk-Fadenpendel entspricht in seiner wesentlichen Funktion einem herkömmlichen Kreuzgelenkpendel.

Erfindungsgemäß ist vorgesehen, dass die Zugmittel als Fäden, insbesondere Polyamid-Fäden ausgebildet sind. Derartige Fäden weisen eine ausreichende Festigkeit zur Aufhängung des Lasers, einen relativ geringen Wärmeausdehnungskoeffizienten und hinreichende biegeschlaffe Eigenschaften auf, sind preisgünstig und lassen sich einfach verarbeiten.

Mit Vorteil ist vorgesehen, dass die Zugmittel in den Befestigungspunkten mittels Führungshülsen befestigt sind, die in Durchbrüchen der Aufhängungen beziehungsweise Schaukeltische befestigt, vorzugsweise klemmend befestigt sind. Dazu sind die Aufhängungen beziehungsweise die Schaukeltische vorzugsweise plattenartig ausgebildet und besitzen Durchbrüche, in die je eine Führungshülse gesteckt und verklemmt wird. Die Führungshülsen besitzen zur klemmenden Befestigung an ihrer Mantelfläche zum Beispiel eine Ringnut, in der die Aufhängungen beziehungsweise Schaukeltische befestigt werden.

Nach einer Weiterbildung der Erfindung ist insbesondere vorgesehen, dass die Führungshülsen aus Kunststoff bestehen. Alternativ können die Führungshülsen auch aus Metall, insbesondere Leichtmetall, bestehen. Ein zur Verwendung geeignetes Leichtmetall ist Aluminium.

In einer bevorzugten Ausführungsform ist vorgesehen, dass die Zugmittel an den Führungshülsen stoffschlüssig befestigt sind, insbesondere durch Wärmeeinwirkung stoffschlüssig befestigt sind. Dazu bestehen die Führungshülsen und die Zugmittel bevorzugt aus Kunststoff. Die Zugmittel werden durch Bohrungen der Führungshülsen gesteckt und verklemmt und die Zugmittel anschließend zum Beispiel mit Hilfe eines Stempels an einem Ende der Führungshülse warm verformt. Durch dieses Warmverstemmen entsteht eine stoffschlüssige Verbindung zwischen Führungshülse und Zugmittel.

Nach einer Weiterbildung der Erfindung ist vorgesehen, dass der erste Schaukeltisch kreuzförmig, ringförmig, rund oder ellipsenförmig ausgebildet ist. Ein kreuzförmig ausgebildeter erster Schaukeltisch ist insbesondere so ausgeformt, dass die Kreuzform dem von den zugehörigen Verbindungslinien der Befestigungspunkte gebildeten Kreuz entspricht. Alternativ kann der erste Schaukeltisch auch flächig oder ringförmig ausgebildet sein.

Erfindungsgemäß ist vorgesehen, dass mindestens ein Schaukeltisch Materiallagen mit unterschiedlicher thermischer Längenausdehnung aufweist, sodass bei Temperaturänderung eine bimetallähnliche Verformung des Schaukeltischs derart eintritt, dass thermische Längenänderungen der Zugmittel kompensiert werden. Dabei sind die Materiallagen so angeordnet, dass eine thermische Längenausdehnung der Zugmittel durch ein Verbiegen des Schaukeltischs in Richtung der Verbindungslinien der entsprechenden Schaukel kompensiert werden.

Mit Vorteil ist vorgesehen, dass die Materialschichten als Bimetallschichten ausgebildet sind. Dazu werden zum Beispiel zwei Metallstreifen unterschiedlichen Materials an ihren Enden stoff- und formschlüssig miteinander verbunden, sodass ein Bimetall entsteht.

Nach einer Weiterbildung der Erfindung ist vorgesehen, dass der Doppelschaukel eine Schwingungsdämpfungseinheit, insbesondere eine Wirbelstrombremse, zugeordnet ist. Die Schwingungsdämpfungseinheit hat die Aufgabe, die zum Erreichen der ausgerichteten Ruhelage benötigte Zeit nach einer Auslenkung des Lasers relativ zum Gehäuse des Nivelliergeräts zu verkürzen. Durch die Verwendung einer Wirbelstrombremse wird eine Verzögerung relativ zur Geschwindigkeit beziehungsweise Pendelgeschwindigkeit der Schaukeltische erreicht, wodurch ein Erreichen der exakten Ruhelage gewährleistet bleibt.

Schließlich ist vorgesehen, dass der Doppelschaukel mindestens ein Anschlagelement zur Begrenzung der Schwingungsamplitude zugeordnet ist. Dieses Anschlagelement kann zum Beispiel auf dem zweiten Schaukeltisch angeordnet sein, das mit einem an der ersten Aufhängung oder dem Gehäuse befestigten Gegenelement zusammenwirkt. Das Gegenelement kann dabei zum Beispiel als Finger ausgebildet sein, der in ein hohlzylinderförmiges Anschlagelement hineinreicht.

### Kurze Beschreibung der Zeichnungen

Die Erfindung wird nachfolgend anhand von Figuren näher erläutert. Es zeigen:
- Figur 1: eine Schnittdarstellung eines Nivelliergeräts mit einem kardanisch gelagerten Laser,
- Figur 2: eine Doppelschaukel eines Kreuzgelenk-Fadenpendels nach einem ersten Ausführungsbeispiel,
- Figur 3: eine Doppelschaukel eines Kreuzgelenk-Fadenpendels nach einem zweiten Ausführungsbeispiel,
- Figuren 4a und 4b: die Befestigung von Zugmitteln an einer Aufhängung und einem Schaukeltisch einer Schaukel mittels Führungshülsen in Seitenansicht und Draufsicht,
- Figur 5: ein Ausführungsbeispiel eines Kreuzgelenk-Fadenpendels und
- Figur 6: ein Ausführungsbeispiel eines Kreuzgelenk-Fadenpendels mit einem Anschlagelement.

### Ausführungsform(en) der Erfindung

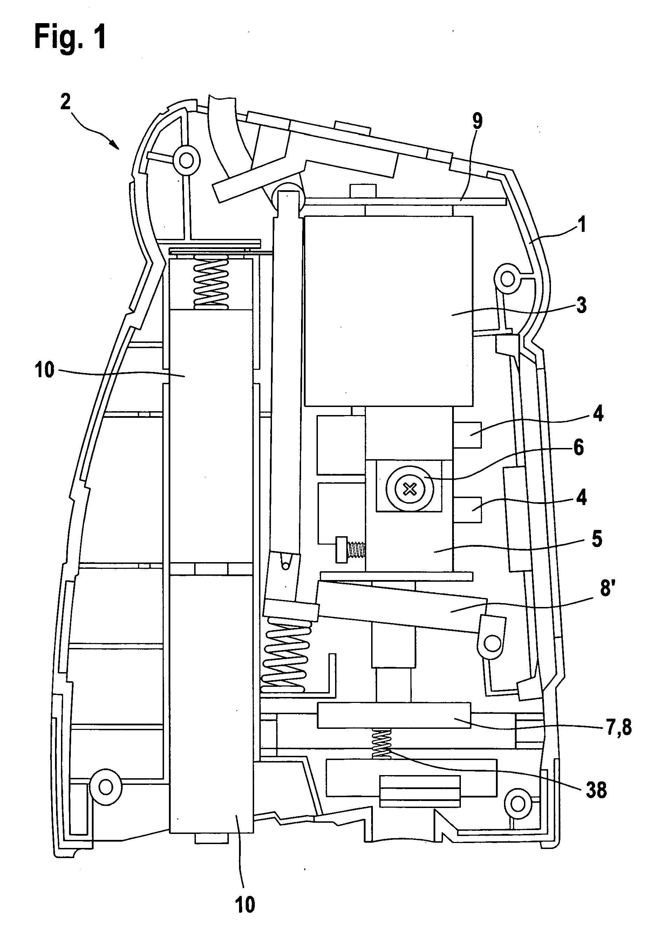

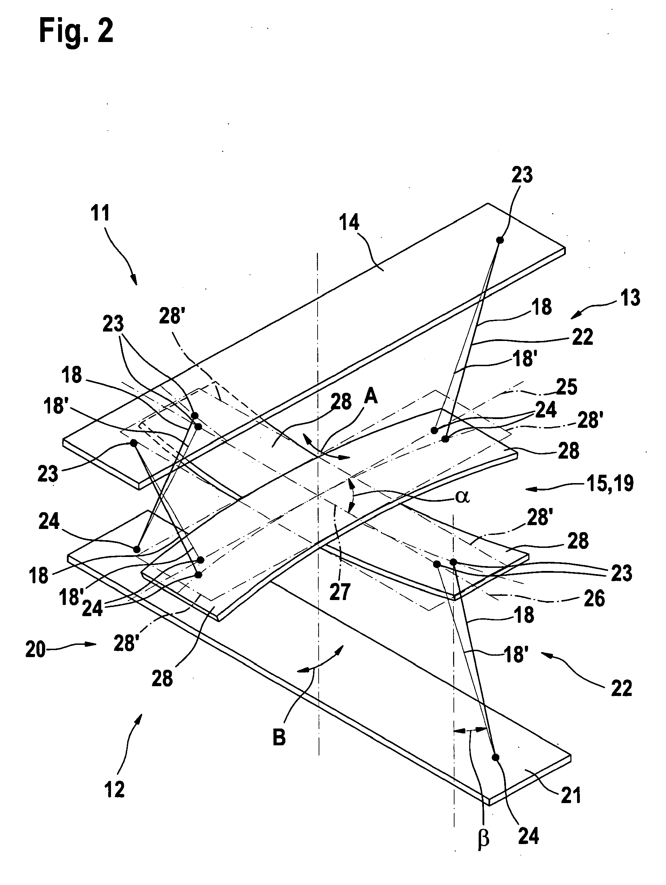

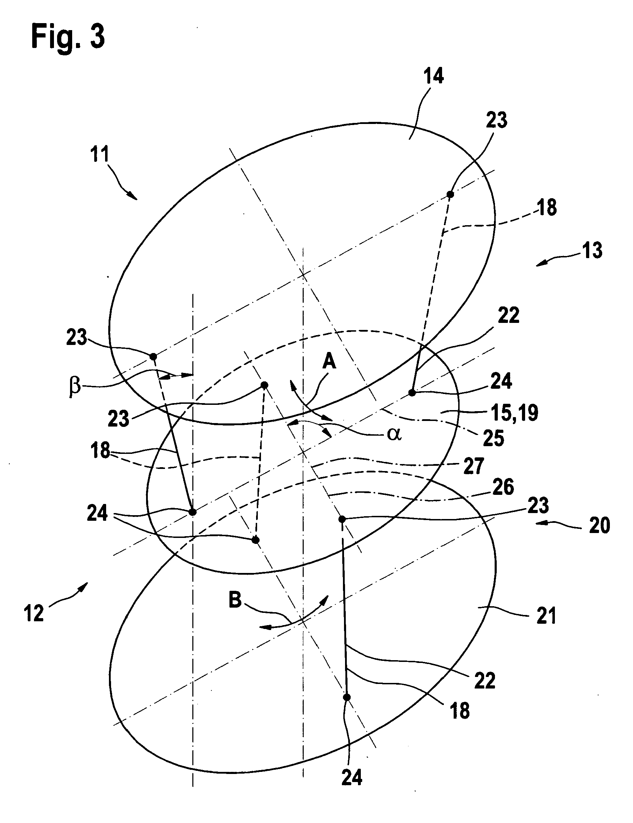

Die Figur 1 zeigt ein Nivelliergerät in einer Schnittdarstellung mit einer in einem Gehäuse 1 des Nivelliergeräts 2 angeordneten, in Figur 1 nur schematisch dargestellter, kardanischer Lagerung 3 mit einem darunter angeordneten, mittels der kardanischen Lagerung 3 gelagerten Laser 4 in einer Halterung 5. Die Halterung 5 weist in seinem Seitenbereich Ausgleichsgewichte 6 zur "Trimmung" der Laser 4 und Halterung 5 auf. Unterhalb der Halterung 5 befindet sich eine als Wirbelstrombremse 7 ausgebildete Schwingungsdämpfungseinheit 8 zur Dämpfung auftretender Schwingungen der kardanischen Lagerung 3 bei einer Auslenkung des Lasers 4 gegenüber dem Gehäuse 1 und eine Transportsperre 8. Oberhalb der kardanischen Lagerung 3 befindet sich eine Elektronik-Platine 9 zur Beschaltung der Laser 4, die von Akkumulatoren 10 gespeist werden. Die kardanische Lagerung 3 kann beispielsweise als Kreuzgelenk-Fadenpendel 11 ausgebildet sein, das eine Doppelschaukel 12 aufweist, die in den Figuren 2 und 3 in zwei Ausführungsbeispielen dargestellt sind.

Die Figur 2 zeigt eine Doppelschaukel 12 eines Kreuzgelenk-Fadenpendels 11 in einem ersten Ausführungsbeispiel. Die Doppelschaukel 12 besitzt eine erste Schaukel 13, die an einer ersten Aufhängung 14 hängend befestigt ist. Die erste Schaukel 13 besteht aus einem ersten Schaukeltisch 15, der an zwei als Fäden 16, insbesondere Polyamid-Fäden 17, ausgebildeten biegeschlaffen Zugmitteln 18 an der ersten Aufhängung 14 hängend befestigt ist. Der erste Schaukeltisch 15 der ersten Schaukel 13 bildet gleichzeitig eine zweite Aufhängung 19 der zweiten Schaukel 20. Dazu ist der erste Schaukeltisch 15 im Ausführungsbeispiel der Figur 2 kreuzförmig ausgebildet. Die zweite Schaukel 20 weist einen zweiten Schaukeltisch 21 auf, der seinerseits mittels zweier als Fäden 16 (insbesondere Polyamid-Fäden 17) ausgebildeten biegeschlaffen Zugmitteln 18 am ersten Schaukeltisch 15 hängend befestigt ist. Am zweiten Schaukeltisch 21 ist zum Beispiel ein nicht dargestellter Laser befestigt. Die Doppelschaukel 12 bildet zusammen mit der ersten Aufhängung 14 das Kreuzgelenk-Fadenpendel 11. Die erste Schaukel 13 hat eine Schwingebene (Doppelpfeil A), die senkrecht auf einer Schwingebene (Doppelpfeil B) der zweiten Schaukel liegt. Das Kreuzgelenk-Fadenpendel 11 weist somit eine Doppelschaukel 12 mit einer ersten Schaukel 13 und einem weiteren, am ersten Schaukeltisch 15 aufgehängten, um den Winkel α = 90° gedrehten zweiten Schaukel 20 auf. Das Kreuzgelenk-Fadenpendel 11 hat die Funktion der kardanischen Lagerung 3. Die erste Aufhängung 14 bestimmt mit ihrer Lage die Zuordnung des Kreuzgelenk-Fadenpendels 11 zum Gehäuse 1 des Nivelliergeräts 2 und ist als einziges Bauteil mit dem Gehäuse 1 starr verbunden. Die Aufhängungen 14, 19 und Schaukeltische 15, 21 sind jeweils plattenförmig ausgebildet und die Aufhängungen 14, 19, die Zugmittel 18 und die Schaukeltische 15, 21 jeder der Schaukeln 13, 20 bilden ein gleichschenkliges Trapez 22. Dabei schließt jedes der Zugmittel 18 in der Ruhestellung der zugeordneten Schaukel 13, 20 mit der Vertikalen V einen Winkel β, β' ein, der 90° zur zugeordneten Schwingebene verläuft. Die Aufhängungen 14, 19 der ersten Schaukel 13 und der zweiten Schaukel 20 weisen obere Befestigungspunkte 23 und die Schaukeltische 15, 21 der beiden Schaukeln 13, 20 weisen untere Befestigungspunkte 24 auf, an denen die zugehörigen Zugmittel befestigt sind. Zwischen den unteren Befestigungspunkten 24 der ersten Schaukel 13 ergibt sich eine erste gedachte Verbindungslinie 25 und zwischen den oberen Befestigungspunkten 23 der zweiten Schaukel 20 ergibt sich eine zweite gedachte Verbindungslinie 26. Die beiden Verbindungslinien 25, 26 bilden ein Kreuz 27, wobei die beiden Verbindungslinien 25, 26 einen Winkel von 90° einschließen.

Die erste Aufhängung 14 des in der Figur 2 dargestellten Kreuzgelenk-Fadenpendels 11 besteht zum Beispiel aus einem formstabilen rechteckigen Streifen. Dieser Streifen besteht zum Beispiel aus einem gewalzten Blech, Formpressstoffen oder einem gespritzten formstabilen Kunststoffteil. Der erste Schaukeltisch 15 kann ebenfalls aus mindestens einem Blechstreifen bestehen und hat eine Kreuzform mit vier gleich langen Armen 28. Die biegeschlaffen Zugmittel 18 der Schaukeln 13, 20 sind jeweils auf einer Mittelachse der die Aufhängungen 14, 19 beziehungsweise der Schaukeltische 15, 21 bildenden Streifen in gleicher Entfernung vom äußeren Rand angebracht. Die Zugmittel 18 bestehen aus einem zähen, abriebfesten, Schwingungen gut isolierendem Material von hoher Zugfestigkeit und geringer Wärmeausdehnung, geeignet für einen Temperatureinsatzbereich von -15°C bis +50°C. Die biegeschlaffen Zugmittel 18 sind insbesondere Polyamid-Fäden 17.

Die Wärmeausdehnung der biegeschlaffen Zugmittel 18 kann durch Verwendung von Bimetallstreifen als Aufhängung 14, 19 beziehungsweise Schaukeltisch 15, 21 kompensiert werden. Durch Einsatz eines Metallstreifens, der aus zwei Schichten unterschiedlichen Materials besteht, die stoff- und formschlüssig an ihren Enden miteinander verbunden sind, entsteht ein Bimetallstreifen, der sich bei Temperaturänderungen verbiegt. Durch Abstimmung der Längen der Zugmittel 18 sowie ihrer Abstände auf den als Bimetallstreifen ausgebildeten Aufhängungen 14, 19 beziehungsweise Schaukeltischen 15, 21 sowie der materialspezifischen Auswahl der biegeschlaffen Zugmittel 18 und des Bimetalls. So kann zum Beispiel Polyamid mit einem linearen Ausdehnungskoeffizienten von 8 x 10⁻² mm °C/m mit einem Bimetall-Streifen aus Eisen-Zink kombiniert und maßgeblich abgestimmt eingesetzt werden. Zur Verstärkung dieses Effekts können zwei kreuzweise aufeinander angebrachte Bimetallstreifen als erster Schaukeltisch 15 verwendet werden. Dazu werden die zu erwartenden Biegekrümmungen entgegengesetzt zueinander angeordnet (siehe Positionen 28, 28' der Arme des ersten Schaukeltischs in Figur 2).

Die Figur 3 zeigt ein Kreuzgelenk-Fadenpendel 11 in einem zweiten Ausführungsbeispiel, das im Wesentlichen dem Kreuzgelenk-Fadenpendel 11 der Figur 1 entspricht. Bei der Ausführungsform des Kreuzgelenk-Fadenpendels 11 der Figur 3 werden rondenförmige Aufhängungen 14, 19 beziehungsweise Schaukeltische 15, 21 verwendet.

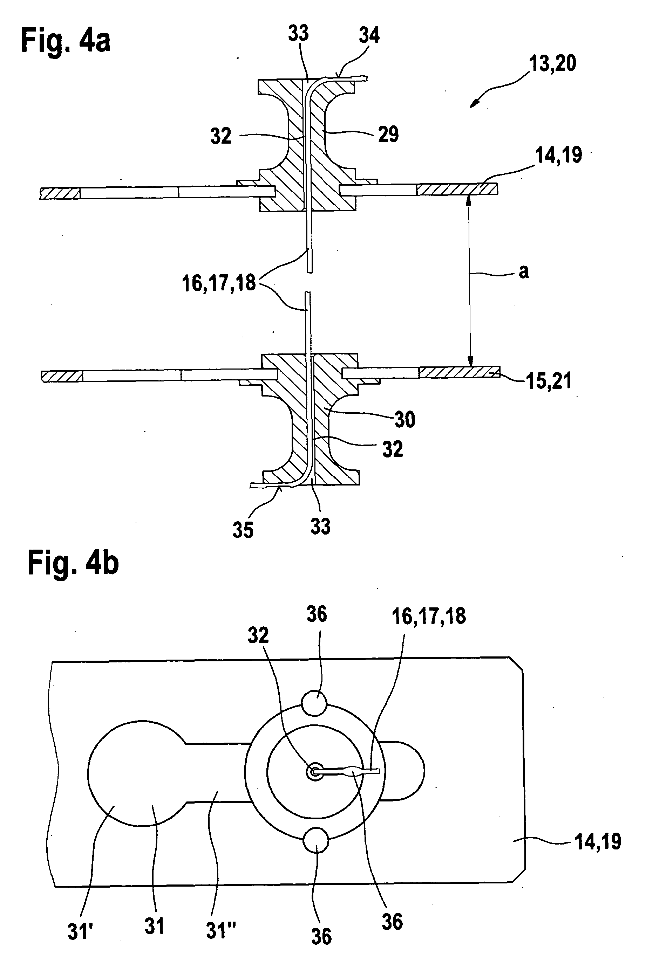

Die Figur 4 zeigt die Befestigung der biegeschlaffen Zugmittel 18 in den Befestigungspunkten 23, 24 der Aufhängungen 14, 19 beziehungsweise Schaukeltische 15, 21. Dazu sind die Zugmittel 18 in den Befestigungspunkten 21, 24 mittels Führungshülsen 30 befestigt, die in Durchbrüchen 31 der Aufhängungen 14, 19 beziehungsweise Schaukeltische 15, 21 befestigt sind. Die Durchbrüche weisen dazu eine Einführöffnung 31' zum Einführen der Führungshülse 30 und einen Klemmschlitz 31" auf. Die Führungshülsen 30 sind vorzugsweise aus Kunststoff, der eine klemmende Befestigung der Zugmittel 18 in den Befestigungspunkten 23, 24 ermöglicht. Dazu werden die Zugmittel 18 an den Führungshülsen 30 durch Wärmeeinwirkung stoffschlüssig befestigt. Sind die Zugmittel 18 zum Beispiel Polyamid-Fäden 17, so wird für eine Serienmontage von Kreuzgelenk-Fadenpendeln 11 die erforderliche Distanz a eingestellt, um anschließend eine stoffschlüssige Verbindung zwischen den Polyamid-Fäden 17 und den aus Kunststoff bestehenden Führungshülsen 29, 30 durch Warmverstemmen herzustellen. Hierzu werden die Zugmittel 18 durch die Bohrungen 32 der Führungshülsen 30 gesteckt, in deren Schlitzen 33 an der Oberseite 34 beziehungsweise Unterseite 35 verklemmt und anschließend mit Hilfe eines nicht dargestellten Stempels auf der Oberseite 34 beziehungsweise Unterseite 35 stoffschlüssig warm verformt. Dabei entstehen stoffschlüssige Befestigungsbereiche 36. Die Befestigung der Führungshülsen in den Aufhängungen 14, 19 beziehungsweise Schaukeltischen 15, 21 erfolgt durch Einschieben der Führungshülse 29, 30 in die vorhandenen Durchbrüche 31.

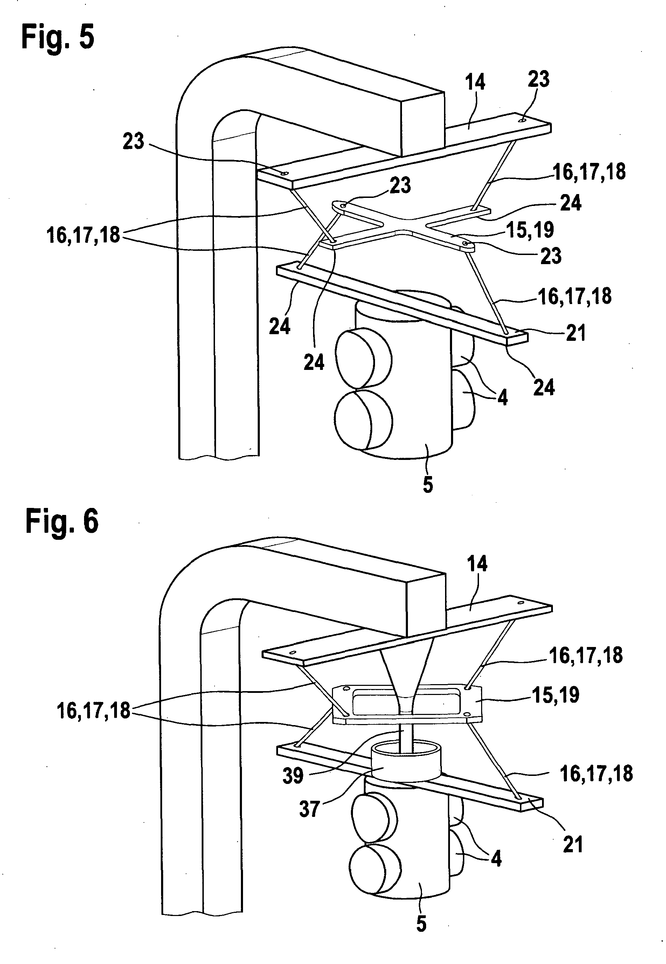

Die Figuren 5 und 6 zeigen zwei weitere Ausführungsbeispiele eines Nivelliergeräts 2 mit Kreuzgelenk-Fadenpendel 11. Während die Doppelschraube 12 der Figur 5 im Wesentlichen dem Doppelpendel der Figur 2 entspricht, zeigt die Figur 6 ein Kreuzgelenk-Fadenpendel 11 mit einem ringförmig ausgebildeten ersten Schaukeltisch 15. Dabei ist der ringförmige erste Schaukeltisch 15 im Wesentlichen quadratisch ausgebildet, wobei die Befestigungspunkte 23, 24 in den Ecken ausgebildet sind. Der zweite Schaukeltisch weist ein hohlzylinderförmiges Anschlagelement 37 auf, in das ein als Kontaktfeder 38 ausgebildeter Kontaktfinger 39 eingreift. Das Anschlagelement 37 sorgt für eine mechanische Begrenzung des Ausschlags des Kreuzgelenk-Fadenpendels 11. Zusätzlich sorgt der als Kontaktfeder 38 ausgebildete Kontaktfinger 39 für ein optisches oder akustisches Signal, sobald der Nivellierbereich überschritten wird. Die am zweiten Schaukeltisch 21 befestigten Laser 4 sind zur Längsachse des zweiten Schaukeltischs 21 und zueinander justiert. Zusätzliche Ausgleichsgewichte 6 sorgen für einen Massenausgleich der Halterung 5.

## Patentansprüche

1. Nivelliergerät mit mindestens einem kardanisch gelagerten Laser, insbesondere Linienlaser, das eine Doppelschaukel (12) aufweist, deren eine, erste Schaukel (13) eine Schwingebene besitzt, die mit einer Schwingebene ihrer anderen, zweiten Schaukel (20) einen Winkel (α) ungleich Null einschließt, wobei die erste Schaukel (13) einen ersten Schaukeltisch (15) aufweist, der eine zweite Aufhängung (19) bildet, an der die zweite Schaukel (20) hängend befestigt ist, wobei die Schaukeln (13,20) jeweils mindestens zwei zueinand beabstandete Pendelarme aus biegeschlaffen Zugmitteln (18) aufweisen, **dadurch gekennzeichnet, dass** die kardanische Lagerung als Kreuzgelenk-Fadenpendel ausgebildet ist, wobei die Zugmittel als Fäden (16), Insbesondere Polyamid-Fäden (17), ausgebildet sind, und wobei mindestens ein Schaukeltisch (15,21) Materiallagen mit unterschiedlicher thermischer Längenausdehnung aufweist, sodass bei Temperaturänderung eine bimetallähnliche Verformung des Schaukeltischs (15,21) derart eintritt, dass thermische Längenveränderungen der Zugmittel (18) kompensiert werden.

2. Nivelliergerät nach Anspruch 1, **gekennzeichnet durch** eine erste Aufhängung (14), an der die erste Schaukel (13) hängend befestigt ist.

3. Nivelliergerät nach einem der vorhergehenden Ansprüche, **dadurch gekennzeichnet, dass** die zweite Schaukel (20) einen zweiten Schaukeltisch (21) aufweist, an dem der Laser (4) befestigt ist.

4. Nivelliergerät nach einem der vorhergehenden Ansprüche, **dadurch gekennzeichnet, dass** der Winkel (α) zwischen den Schwingebenen 90° oder annähernd 90° beträgt.

5. Nivelliergerät nach einem der vorhergehenden Ansprüche, **dadurch gekennzeichnet, dass** zumindest der erste Schaukeltisch (15) plattenförmig oder etwa plattenförmig ausgebildet ist.

6. Nivelliergerät nach einem der vorhergehenden Ansprüche, **dadurch gekennzeichnet, dass** mindestens ein Zugmittel (18) in der Ruhestellung der zugeordneten Schaukel (13,20) beziehungsweise der Doppelschaukel (12) mit der Vertikalen (V) einen Winkel ungleich Null einschließt und vorzugsweise dabei in einer Ebene liegt, die 90° zur zugeordneten Schwingebene verläuft.

7. Nivelliergerät nach einem der vorhergehenden Ansprüche, **dadurch gekennzeichnet, dass** die Aufhängung (14,15), die Zugmittel (18) und der Schaukeltisch (15,21) mindestens einer der Schaukeln (13,20) ein gleichschenkliges Trapez (22) bilden.

8. Nivelliergerät nach einem der vorhergehenden Ansprüche, **dadurch gekennzeichnet, dass** die Aufhängung (14,19) und der Schaukeltisch (15,21) jeder der Schaukeln (13,20) Befestigungspunkte (23,24) aufweisen, an denen die zugehörigen Zugmittel (18) befestigt sind.

9. Nivelliergerät nach einem der vorhergehenden Ansprüche, **dadurch gekennzeichnet, dass** die oberen Befestigungspunkte (23) gegenüber den unteren Befestigungspunkten (24) einer Schaukel (13,20) weiter auseinanderliegen.

10. Nivelliergerät nach einem der vorhergehenden Ansprüche, **dadurch gekennzeichnet, dass** eine erste gedachte Verbindungslinie (25) zwischen den der ersten Schaukel (13) zugeordneten Befestigungspunkten (24) des ersten Schaukeltischs (15) und eine zweite Verbindungslinie (26) zwischen den der zweiten Schaukel (20) zugeordneten Befestigungspunkten (23) des ersten Schaukeltischs (15) ein Kreuz (27) bilden, insbesondere einen Winkel von 90° einschließen.

11. Nivelliergerät nach einem der vorhergehenden Ansprüche, **dadurch gekennzeichnet, dass** die Zugmittel (18) in den Befestigungspunkten (23,24) mittels Führungshülsen (29,30) befestigt sind, die in Durchbrüchen (31) der Aufhängungen (14,19) beziehungsweise Schaukeltische (15,21) befestigt, vorzugsweise klemmend befestigt sind.

12. Nivelliergerät nach einem der vorhergehenden Ansprüche, **dadurch gekennzeichnet, dass** die Führungshülsen (29,30) aus Kunststoff bestehen.

13. Nivelliergerät nach einem der vorhergehenden Ansprüche, **dadurch gekennzeichnet, dass** die Zugmittel (18) an den Führungshülsen (29,30) stoffschlüssig befestigt sind, insbesondere durch Wärmeeinwirkung stoffschlüssig befestigt sind.

14. Nivelliergerät nach einem der vorhergehenden Ansprüche, **dadurch gekennzeichnet, dass** der erste Schaukeltisch (15) kreuzförmig, ringförmig, rund oder ellipsenförmig ausgebildet ist.

15. Nivelliergerät nach einem der vorhergehenden Ansprüche, **dadurch gekennzeichnet, dass** die Materialschichten als Bimetallschichten ausgebildet sind.

16. Nivelliergerät nach einem der vorhergehenden Ansprüche, **dadurch gekennzeichnet, dass** der Doppelschaukel (12) eine Schwingungsdämpfungseinheit (8), insbesondere eine Wirbelstrombremse (7), zugeordnet ist.

17. Nivelliergerät nach einem der vorhergehenden Ansprüche, **dadurch gekennzeichnet, dass** der Doppelschaukel (12) mindestens ein Anschlagelement (37) zur Begrenzung der Schwingungsamplitude zugeordnet ist.

## Claims

1. Levelling instrument having at least one universally mounted laser, in particular a line laser, which has a double swing (12), one of whose swings, the first swing (13), has a swing plane which encloses with a swing plane of its other, second swing (20) an angle (α) other than zero, the first swing (13) having a first swing table (15) which forms a second suspension (19) at which the second swing (20) is fastened in a hanging fashion, the swings (13, 20) respectively having at least two mutually spaced apart pendulum arms comprising flexurally limp traction means (18), **characterized in that** the universal mount is designed as a cross-joint thread pendulum, the traction means being designed as threads (16), in particular polyamide threads (17), and at least one swing table (15, 21) having material layers of different thermal length expansion such that in the event of temperature change a quasi-bimetallic deformation of the swing table (15, 21) occurs in such a way that thermal length changes in the traction means (18) are compensated.

2. Levelling instrument according to Claim 1, **characterized by** a first suspension (14) at which the first swing (13) is fastened in a hanging fashion.

3. Levelling instrument according to one of the preceding claims, **characterized in that** the second swing (20) has a second swing table (21) on which the laser (4) is fastened.

4. Levelling instrument according to one of the preceding claims, **characterized in that** the angle (α) between the swing planes is 90°, or approximately 90°.

5. Levelling instrument according to one of the preceding claims, **characterized in that** at least the first swing table (15) is designed in the shape of a plate, or approximately in the shape of a plate.

6. Levelling instrument according to one of the preceding claims, **characterized in that** in the rest position of the assigned swing (13, 20) or of the double swing (12) at least one traction means (18) encloses with the vertical (V) an angle other than zero, and preferably in this case lies in a plane which runs at 90° to the assigned swing plane.

7. Levelling instrument according to one of the preceding claims, **characterized in that** the suspension (14, 15), the traction means (18) and the swing table (15, 21) of at least one of the swings (13, 20) form an isosceles trapeze (22).

8. Levelling instrument according to one of the preceding claims, **characterized in that** the suspension (14, 19) and the swing table (15, 21) of each of the swings (13, 20) have fastening points (23, 24) at which the associated traction means (18) are fastened.

9. Levelling instrument according to one of the preceding claims, **characterized in that** by comparison with the lower fastening points (24) of a swing (13, 20) the upper fastening points (23) lie further apart from one another.

10. Levelling instrument according to one of the preceding claims, **characterized in that** a first imaginary connecting line (25) between the fastening points (24), assigned to the first swing (13) of the first swing table (15), and a second connecting line (26) between the fastening points (23) assigned to the second swing (20), of the first swing table (15) form a cross (27), in particular include an angle of 90°.

11. Levelling instrument according to one of the preceding claims, **characterized in that** the traction means (18) are fastened in the fastening points (23, 24) by means of guide sleeves (29, 30) which are fastened in cutouts (31) of the suspensions (14, 19) or swing tables (15, 21), preferably being fastened by jamming.

12. Levelling instrument according to one of the preceding claims, **characterized in that** the guide sleeves (29, 30) consist of plastic.

13. Levelling instrument according to one of the preceding claims, **characterized in that** the traction means (18) are fastened on the guide sleeves (29, 30) by bonding, in particular by bonding through the effect of heat.

14. Levelling instrument according to one of the preceding claims, **characterized in that** the first swing table (15) is designed in the shape of a cross or ring, to be round, or in the shape of an ellipse.

15. Levelling instrument according to one of the preceding claims, **characterized in that** the material layers are designed as bimetallic layers.

16. Levelling instrument according to one of the preceding claims, **characterized in that** the double swing (12) is assigned a vibration-damping unit (8), in particular an eddy-current brake (7).

17. Levelling instrument according to one of the preceding claims, **characterized in that** the double swing (12) is assigned at least one stop element (37) for limiting the vibration amplitude.

## Revendications

1. Appareil de mise à niveau comprenant au moins un laser supporté par cardan, notamment un laser linéaire qui présente une double bascule (12) dont une, première bascule (13), possède un plan d'oscillation qui forme, avec un plan d'oscillation de son autre, deuxième bascule (20), un angle (α) différent de zéro, la première bascule (13) présentant un premier plateau basculant (15), lequel forme une deuxième suspension (19) à laquelle est fixée de manière suspendue la deuxième bascule (20), les bascules (13, 20) présentant respectivement au moins deux bras de balancier espacés l'un de l'autre et constitués de moyens de traction (18) non rigides, **caractérisé en ce que** le support à cardan est réalisé sous la forme d'un balancier à fils à croisillon, les moyens de traction étant réalisé sous la forme de fils (16), notamment des fils en polyamide (17), et au moins un plateau basculant (15, 21) présentant des couches de matière ayant des dilatations thermiques en longueur différentes, de sorte qu'en cas de changement de température, il se produit une déformation de type bimétallique du plateau basculant (15, 21) de manière à compenser les variations de longueur thermiques des moyens de traction (18).

2. Appareil de mise à niveau selon la revendication 1, **caractérisé par** une première suspension (14) à laquelle est fixée de manière suspendue la première bascule (13).

3. Appareil de mise à niveau selon l'une des revendications précédentes, **caractérisé en ce que** la deuxième bascule (20) présente un deuxième plateau basculant (21) auquel est fixé le laser (4).

4. Appareil de mise à niveau selon l'une des revendications précédentes, **caractérisé en ce que** l'angle (α) entre les plans d'oscillation est de 90° ou proche de 90°.

5. Appareil de mise à niveau selon l'une des revendications précédentes, **caractérisé en ce qu'**au moins le premier plateau basculant (15) est réalisé en forme de plaque ou approximativement en forme de plaque.

6. Appareil de mise à niveau selon l'une des revendications précédentes, **caractérisé en ce qu'**au moins un moyen de traction (18) en position de repos de la bascule (13, 20) associée ou de la double bascule (12) forme avec la verticale (V) un angle différent de zéro et se trouve ainsi de préférence dans un plan qui s'étend à 90° par rapport au plan d'oscillation associé.

7. Appareil de mise à niveau selon l'une des revendications précédentes, **caractérisé en ce que** la suspension (14, 19), les moyens de traction (18) et le plateau basculant (15, 21) d'au moins l'une des bascules (13, 20) forment un trapèze isocèle (22).

8. Appareil de mise à niveau selon l'une des revendications précédentes, **caractérisé en ce que** la suspension (14, 19) et le plateau basculant (15, 21) de chacune des bascules (13, 20) présentent des points de fixation (23, 24) auxquels sont fixés les moyens de traction (18) associés.

9. Appareil de mise à niveau selon l'une des revendications précédentes, **caractérisé en ce que** les points de fixation supérieurs (23) sont plus écartés l'un de l'autre par rapport aux points de fixation inférieurs (24) d'une bascule (13, 20).

10. Appareil de mise à niveau selon l'une des revendications précédentes, **caractérisé en ce qu'**une première ligne de liaison imaginaire (25) entre les points de fixation (24) du premier plateau basculant (15) associés à la première bascule (13) et une deuxième ligne de liaison (26) entre les points de fixation (23) du premier plateau basculant (15) associés à la deuxième bascule (20) forment une croix (27), notamment forment un angle de 90°.

11. Appareil de mise à niveau selon l'une des revendications précédentes, **caractérisé en ce que** les moyens de traction (18) sont fixés aux points de fixation (23, 24) au moyen de douilles de guidage (29, 30), lesquelles sont fixées dans des traversées (31) des suspensions (14, 19) ou des plateaux basculants (15, 21), de préférence fixées par serrage.

12. Appareil de mise à niveau selon l'une des revendications précédentes, **caractérisé en ce que** les douilles de guidage (29, 30) sont en matière plastique.

13. Appareil de mise à niveau selon l'une des revendications précédentes, **caractérisé en ce que** les moyens de traction (18) sont fixés aux douilles de guidage (29, 30) par fusion de matières, notamment fixés par fusion de matières par effet thermique.

14. Appareil de mise à niveau selon l'une des revendications précédentes, **caractérisé en ce que** le premier plateau basculant (15) est réalisé en forme de croix, en forme d'anneau, est rond ou elliptique.

15. Appareil de mise à niveau selon l'une des revendications précédentes, **caractérisé en ce que** les couches de matières sont réalisées sous la forme de couches bimétalliques.

16. Appareil de mise à niveau selon l'une des revendications précédentes, **caractérisé en ce qu'**une unité d'amortissement des oscillations (8), notamment un frein à courant de Foucault (7), est associée à la double bascule (12).

17. Appareil de mise à niveau selon l'une des revendications précédentes, **caractérisé en ce qu'**au moins un élément de butée (37) destiné à limiter l'amplitude d'oscillation est associé à la double bascule (12).
